# EUROPEAN PATENT SPECIFICATION

(11) **EP 2 937 867 B1**
(45) Date of publication and mention of the grant of the patent: **14.11.2018**
(21) Application number: 15714388.4
(22) Date of filing: 03.03.2015
(51) Int. Cl.: G21C 9/004, G21C 13/024, G21C 13/10, G21D 1/02, G21F 9/02, G21C 13/02, G21C 19/303

(54) **CONTAINMENT FILTERED VENTING SYSTEM USED FOR NUCLEAR POWER PLANT**
GEFILTERTES ENTLÜFTUNGSSYSTEM DES SICHERHEITSBEHÄLTERS (CFVS) FÜR EIN KERNKRAFTWERK
SYSTÈME D'ÉVACUATION FILTRÉE DE CONFINEMENT UTILISÉ POUR UNE CENTRALE NUCLÉAIRE

(30) Priority: 03.03.2014 KR 20140252450
(43) Date of publication of application: 28.10.2015
(73) Proprietor: FNCTECH, Gyeonggi-do 446-908 (KR)
(72) Inventor: LEE, Byung Chul, Seoul 158-741 (KR); LEE, Doo Yong, Hwasung-si, Gyeonggi-do 445-739 (KR); PARK, Tong Kyu, Incheon 403-843 (KR); BANG, Young Suk, Yongin-si, Gyeonggi-do 446-784 (KR); HA, Jung Hee, Gyeonggi-do 448-737 (KR); JUNG, Woo Wyoung, Gyeonggi-do 443-822 (KR); SHIN, So Eun, Gunpo-si, Gyeonggi-do 435-838 (KR)
(74) Representative: Stolmár & Partner Patentanwälte PartG mbB
(86) International application number: PCT/KR2015/002042
(87) International publication number: WO 2015/133794

(56) References cited:
- DE-B3- 10 328 773
- FR-A1- 2 682 214
- JP-A- H0 875 886
- JP-A- H07 209 488
- JP-B2- 2 818 237
- JP-B2- 2 818 237
- KR-A- 20100 122 740
- US-A1- 2014 010 340

## Description

### TECHNICAL FIELD

The present invention relates to a containment filtered venting system (CFVS) for a nuclear power plant.

### BACKGROUND ART

A filtered venting system for a containment building is directed to a system wherein substances, when the pressure in a containment building is over a predetermined level, may be vented from a reactor building in order toprevent any danger of damage to a containment building due to over-pressure in the containment building when a postulated accident occurs in a nuclear power plant. Since the reactor building has plenty of radioactive aerosol and radioactive gas during the ventilation, a proper filtering with respect to the radioactive substances is necessary. The filtered venting systems for a nuclear building have been developed by AREVA, WH, IMI, etc. and have been applied to many power plants.

The AREVA corporation (the old name is the Siemens corporation) has disclosed a Korean Patent "Nuclear engineering system and method for nuclear engineering system" wherein the publication number is 10-2006-0015761, the publication date is February 20, 2006, and the international publication number is WO 2004/114322). Figure 1 ∼ 3 are illustrating the above nuclear engineering system.

The IMI corporation (the old name is the SULZER corporation) has disclosed "an apparatus for removing aerosols from the air of a nuclear reactor containment, wherein the patent number is 5,406,603, and the date of the patent is April 1, 1995.

The Westinghouse corporation has disclosed "filtered venting and decay heat removing apparatus and system for containment structures, and method of operation, wherein the patent number is 4,859,405, and the date of the patent is August 22, 1989.

The CFVS of the ARVA corporation has features in that the droplet which has passed through nozzles is physically absorbed by a pre-filter and recirculates as a scrubber solution with the aid of gravity. At this time, when a plenty of droplets are inputted into the pre-filter, the droplets may disturb the flow or may be inputted into a metal fiber filter of the next stage, thus causing problems, for example, a clogging, etc. In addition, since the number of nozzles is relatively smaller, if an individual nozzle is damaged, it might affect other nozzles.

The CFVS of the IMI corporation has features in that a chemical substance named Aliquat336 is added to the scrubber solution so as to remove organic iodine. Such a substance may explode at a room temperature and may cause a forming phenomenon, and the performance of such a substance has not been verified at an early stage of venting. The efficiency of the CFVS is not proved when it is at a high temperature which is an actual operation condition of the CFVS. There may be a plenty of difficulties in the manufacturing and installing due to the uses of hundreds of impact nozzles.

The Westinghouse corporation has supplied two kinds of CFVSs of DFM and FILTRA-MWSS. In case of the DFM, there may be a hot spot due to clogging and residual heat. In case of zeolite which is a filler of an iodine filter generally used so as to remove organic iodine, since the filtering efficiency is high at a high temperature rather than at a room temperature, the filtering efficiency of the iodine filter may be low when a pre-heating is not provided at an initial stage of CFVS operation. In case of the FILTRA-MVSS, since there is not any means for removing an organic iodine except for the scrubber solution, the removing efficiency of such a substance is low, and the manufacturing and installing may be hard because of the uses of hundreds of long Venturi nozzles.

JP 2 818237 B2 dicloses the features of the preamble of claim 1.

FR 2682 214 A discloses A confinement enclosure of a nuclear reactor communicates with the outside atmosphere via a cyclone, the entry pipe into the cyclone comprising a venturi.

US 2014/010340 A1 discloses a wet filter for a nuclear reactor primary containment vent that employs an inclined manifold having a plurality of outlets that communicate through a first set of metal fiber filters submerged in a pool of water enclosed within a pressure vessel. Furthermore, a demister suspended above the pool of water to remove any entrained moisture in the filtered effluent before being passed through a second stage of higher density, dry, metal fiber filters connected to a second manifold that communicates with an outlet on the pressure vessel that is connected to an exhaust passage to the atmosphere.

Another containment filtered venting system is known from Document DE 103 28 773.

### DISCLOSURE OF THE INVENTION

Accordingly, the present invention is made in an effort to overcome the above-mentioned problems. It is an object of the present invention to provide a containment filtered venting system (CFVS) for a nuclear power plant, wherein aerosols and gas iodine may be removed at a high efficiency, and a driven operation time may increase, and a filtering technique with respect to a filtered substance may be surely diversified, and any possibility of failures in performance may be prevented. The inert gas, which has not been considered in the past, may be eliminated.

To achieve the above objects, there is provided a containment filtered venting system according to claim 1. Preferred embodiments are defined in dependent claims 2-11.

### INDUSTRIAL EFFECTS

According to the present invention, it is possible to provide a filtered venting system having a good radioactive aerosol and gas removing effect as compared with the conventional art.

### BRIEF DESCRIPTION OF THE DRAWINGS

The present invention will become better understood with reference to the accompanying drawings which are given only by way of illustration and thus are not limitative of the present invention, wherein;

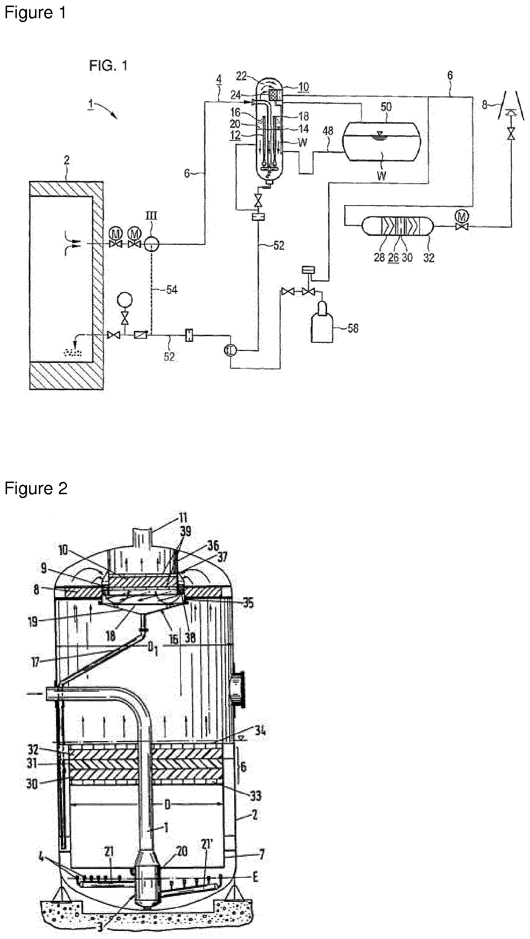

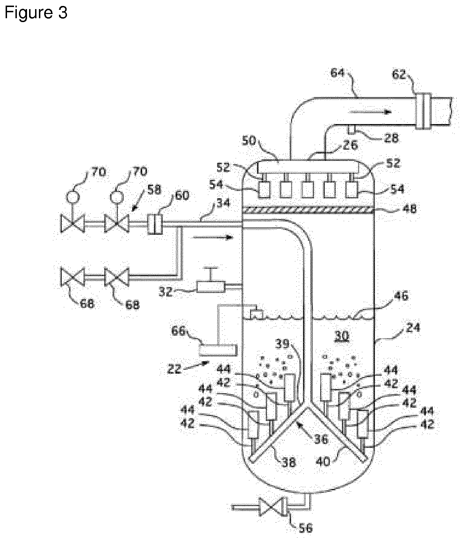

Figures1 to 3 are views illustrating conventional filtered venting systems; and
Figures 4, 7, 8, and 15 are views illustrating examples which are not part of the invention.
Figures 5, 6, 9-14, 16, and 17 are views illustrating filtered venting systems according to the present invention.

### MODES FOR CARRYING OUT THE INVENTION

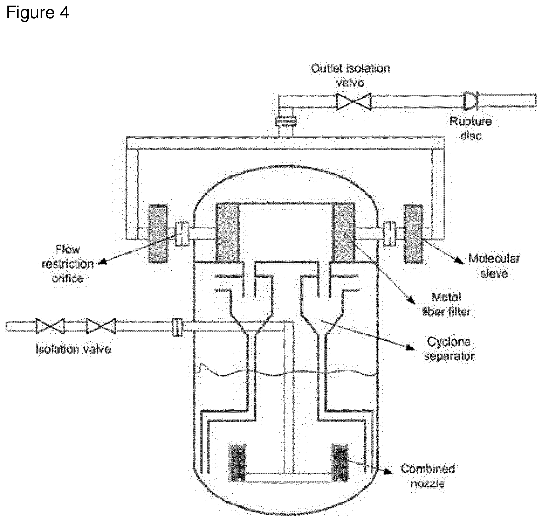

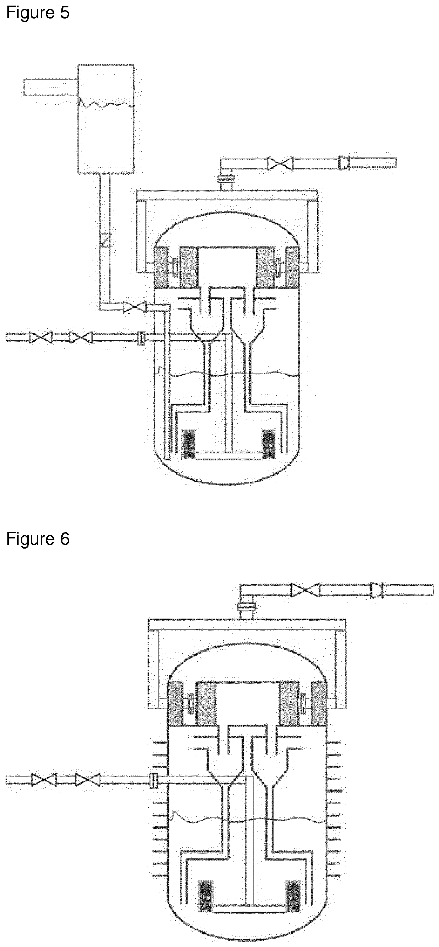

The present invention will be described with reference to the accompanying drawings. Figures 5 and 6 are views of an exemplary embodiment of the present invention. Figure 4 is a view illustrating a basic concept of a filtering and venting container. The product of the present invention includes an inlet pipe and a filtering and venting container which are connected to a reactor building, a throttling orifice, a molecular sieve, and an outlet pipe. At least two isolation pipes are provided at the inlet pipe.

The filtering and venting container includes combined nozzles, a cyclone separator, and a metal fiber filter including a pre-filter. The throttling orifice and the molecular sieve are provided inside of the filtering and venting container. In addition, an outlet isolation valve is provided at the output pipe, and a rupture disc may be provided.

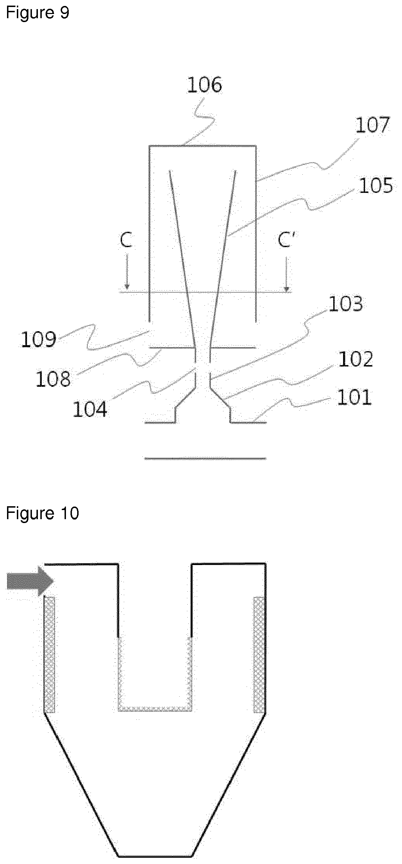

Figure 9 is a view illustrating the cross sections of the combined nozzles according to the present invention. As illustrated in Figure 9, the combined nozzles of the present invention are configured in such a way that distribution pipes from inlet pipes are connected, and a contraction part is provided, in which the cross section decreases in a vertical direction from the distribution pipes, and a next part with the smallest cross section is formed next to the contraction part, and a plurality of holes are formed at the neck part so as to absorb filtering solution. An inner diffuser the cross section of which gradually increases is formed at the top of the neck part. An upper cover is formed at the top of the end of the diffuser, thus changing to the outward direction the flowing direction of exhaust gas from the diffuser, and a side cover is formed at an end portion of the upper cover, thus changing to the downward direction the flowing direction of the exhaust gas.

Therefore, the length of the diffuser may be made as long as possible, and the height of the outlet port may be maximally lowered. Compared with the conventional art, it is possible to prevent any impact-based loads and vibrations of the side wall of the filtering water tank which occur because of the locally erupting air bubbles due to the non-uniform dispersion of small air bubbles in a filtering water tank and the fluctuations at the surface of water.

The conventional Venturi scrubber is configured to atomize the filtering solution into droplets while allowing the exhaust gas inputted through the distribution pipe to pass. Since the Venturi scrubber is disposed, with the Venturi standing from bottom to top, the level of the water surface of the filtering solution should be always higher than the height of the Venturi scrubber, for which the diffuser extending from the Venturi should be longer than a predetermined length so as to enhance the filtering performance along with the formation of droplets, so the Venturi scrubber may become bulky inevitably. In the conventional Venturi scrubber, air bubbles intensively gather at the side of the surface of the water tank where the outlet port is formed, so air bubbles may locally erupt from the surface of water, for which impacts may apply to the side wall of the filtering water tank or vibrations may occur at the side wall thereof.

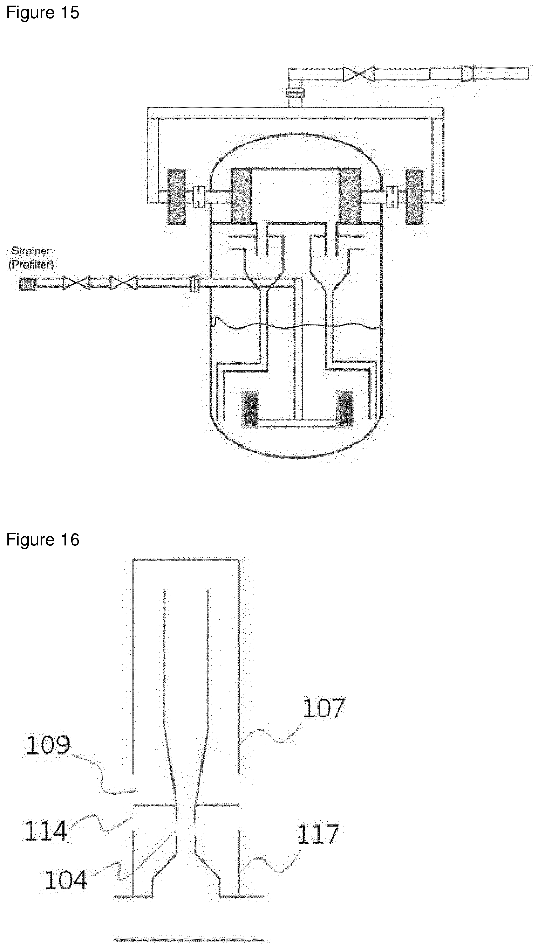

The present invention has disclosed a combined nozzle concept instead of the above-described conventional Venturi scrubber structure, in which combined nozzle structure the height of the surface of the water of the filtering solution may be adjustable irrespective of the length of a diffusing pipe, and air bubbles are guided not to intensively gather at the side of the surface of the water tank. In the combined nozzle of the present invention, there is not any difference between the inlet port through which filtering solution enters and the outlet port through which the filtering solution exits in the form of air bubbles. In this case, mechanical instability near the neck part may be externally supported by the side cover 107 and the lower side cover 117, and the portion near the neck part may be separated by a separation plate 108, which may be substituted with the conventional Venturi scrubber. Figure 16 is a view illustrating the above configuration.

In the conventional Venturi scrubber, it is hard for the air bubbles from the outlet port to ascend up the water surface and to flow back in through the neck part, but in the combined nozzles of the present invention, it is possible for the air bubbles from the outlet port to flow back into the combined nozzles through the neck part, so securing a re-circulation, for which the nozzles of the present invention are different from the conventional Venturi scrubber. The above mentioned re-circulation may contribute to gathering the dusts contained in the exhaust gas into a lump, and the staying time in the filtering water tank may increase, thus enhancing the filtering efficiency as compared with the conventional Venturi scrubber.

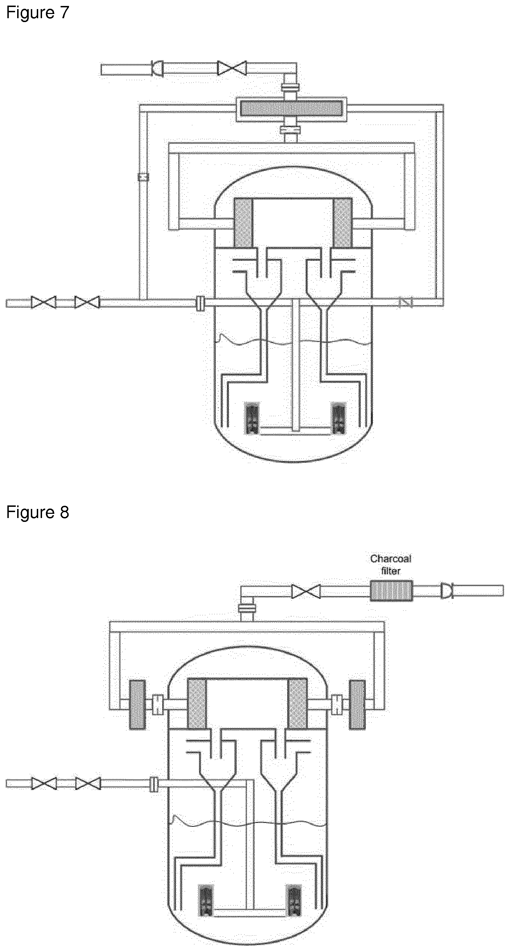

Figure 5 is a view illustrating a configuration wherein there is provided a water filling tank in which scrubber solution is passively filled. Figure 6 is a view illustrating a configuration wherein a radiation fin is attached inside of a filtered venting container. Figure 7 is a view illustrating a configuration wherein it is possible to preheat a molecular sieve by detouring part of the flux at a mouth. Figure 8 is a view illustrating a configuration wherein an active carbon is engaged at a rear end of the molecular sieve. Figure 15 is a view illustrating a pre-filter or a strainer which is installed at the mouth of a passing-through pipe installed inside of the containment building, thus previously preventing any clogging of the pipe due to impurities which may input into the inside of the filtered venting system during the operation of the filtered venting system.

An isolation valve is formed between the entrance pipe and the filtered venting container. Two isolation valves are provided, and the exhaust to the filtering and venting container may be blocked during the normal operation. The isolation valve may open when the pressure of the reactor building reaches at a previously set CFVS opening pressure and may be closed at the closing pressure.

The rupture plate at the outlet pipe serves to prevent the exhaust into the air if the pressure of the filtering and venting container does not increase over a predetermined pressure level when the filtering and venting container first operates. An outlet isolation valve of the outlet pipe serves to prevent the input of gas from the atmosphere into the filtering and venting container in the standby state and opens when the CFVS operates and keeps being open.

The combined nozzles are submerged under the filtering solution (scrubber solution) and serve to efficiently remove the radioactive aerosols contained in the exhaust gas. A chemical substance, which may efficiently eliminate elements and organic iodine, is resolved in the filtering solution. In a state where a predetermined water level is maintained, the aerosols contained the flux which has passed through the combined nozzles can be additionally eliminated.

The droplets of over predetermined sizes among a plurality of droplets forming while passing through the surface of the filtering solution are filtered by a cyclone separator which uses centrifugal force. The droplets filtered by the cyclone separator are combined back with the filtering solution.

The exhaust gas which has passed through the cyclone separator passes through the pre-filter, so the residual fine droplets are removed, and the droplets filtered while they pass through the pre-filter are combined back with the droplets or the filtering solution.

The exhaust gas which has passed through the pre-filter passes through the metal fiber filter, so most of the residual aerosols can be removed, and the exhaust gas which has passed through the metal fiber filter flows into the molecular sieve in a state where mist, etc. is removed thanks to the flashing phenomenon while the exhaust gas flows through the throttling orifice. In the molecular sieve, a silver ion exchange zeolite is filled so as to remove the element/organic iodine. Most of the residual elements and organic iodine are removed over enough staying time. The external water filling tank is filled with water since the external filling water tank valve is opened in a state where the CFVS operation is stopped or during the CFVS operation in case where the water level drops below a predetermined set value after the water level of the filtering solution is monitored. The radiation fin of the filtering and venting container serves to lower the temperature of the filtering and venting container, thus increasing the condensing degree of the exhaust gas.

Part of the flux from the reactor building detours and preheats the molecular sieve, thus optimizing the efficiency of removing the element and organic iodine, and the active carbon filter serves to delay the discharge of the inert gas, for example, xenon, krypton, etc. in a physical adsorption way.

In addition, compared with the conventional filtered venting system, the condensing effect may be enhanced by forming the radiation fin at the filtering and venting container, thus less lowering the water level of the scrubber solution during the operation, which may increase the whole passive filtering operation time. Since the scrubber solution may be passively filled into the filtering and venting container through the scrubber solution water filing tank based on gravity, the whole passive filtering operation time may be increased, and the cyclone separator using a hydroscopic moisture separator for generating centrifugal force may be used, and the pre-filter may be used as a backup tool, so it is possible to lower any chance of the problems, for example, a clogging, etc. even when a lot of droplets are formed.

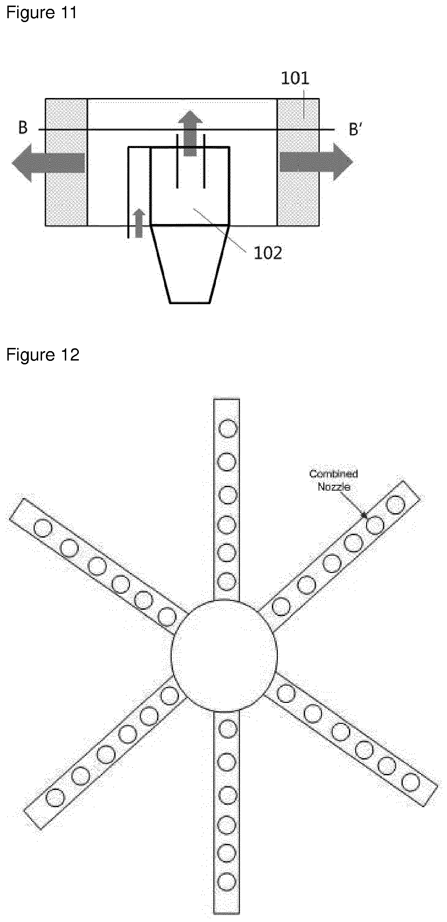

Figure 10 is a view of an exemplary embodiment of the cyclone filtering device. The present invention does not use a single filter. The present invention is characterized in that the droplets and aerosols are processed through the cyclone before the droplets and aerosols are processed through the filter, thus increasing lifespan and enhancing reliability with respect to the filtering system based on any change of the flow rate. The cyclone is configured in such a way that the droplets and aerosols enter past the side surface of the cyclone and flow down along a concave portion formed at the center and then flow back upward. At this time, since the droplets and aerosols flow down circulating around the concave portion, as illustrated in the drawings, when the droplets and aerosols flow down along the concave portion, it is called a cyclone. At this time, radioactive substances in the droplets and aerosols are filtered, and are further filtered by the filter installed inside of the cyclone. Figure 11 is a view illustrating a configuration wherein the cyclone filtering device is engaged to the filter.

In addition, since at least two filtering techniques are used so as to remove aerosols and elements/organic iodine, even though one filtering way has a problem, it is possible to secure minimal filtering efficiency for each substance.

In addition, each nozzle may have a uniform flux distribution in such a way to change the arranged interval between the nozzles, the vertical height based on the inner diameter and the position of the arm where the nozzles are disposed, the sizes of the position-based nozzles and the arranging way of the nozzles. The degradation ratio of the performance due to the problem of each individual nozzle may be lowered through the optimization of the number of the nozzles, and the manufacturing and installation time may be optimized.

Figure 12 is a view illustrating an example of an arrangement of combined nozzles disposed at the branched arm using a common head of an inlet pipe.

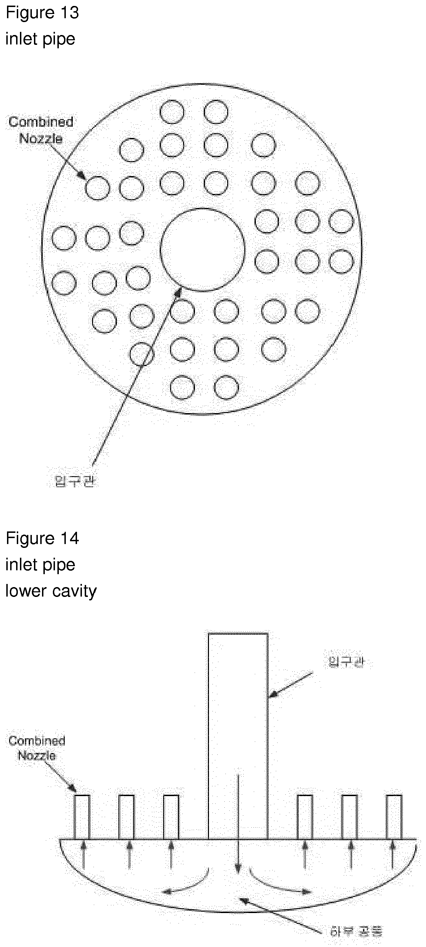

In addition, the combined nozzles may be directly divided from a lower cavity connected to the inlet pipe so as to secure the uniform flux distribution and productivity and economic performance. Figure 13 is a view of an example of the above arrangement, and Figure 14 is a view illustrating an arrangement at a side surface.

Since the metal fiber filter and the molecular sieve are installed inside the filtering and venting container, the filtering and venting container may be designed based on the installation space of each power plant. In order to enhance the filtering performance of the molecular sieve, part of the flux from the reactor building may be detoured to preheat the molecular sieve, thus maintaining the optimum organic iodine removing efficiency and optimizing the amount of zeolite. In addition, the emission time of the inert gas may increase by selectively installing the active carbon filter at the rear end of the molecular sieve, thus reducing the level of radioactivity in the surrounding environment.

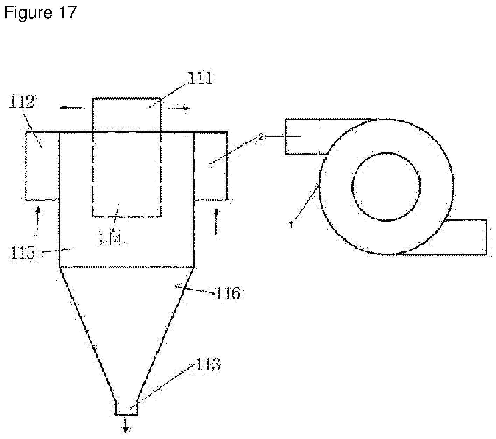

Figure 17 is a cross sectional view and a plane view of the cyclone filtering device. The cyclone filtering device is formed in a cone shape wherein the cross section when viewing from the above looks like a circular pillar shape the cross section of which becomes gradually smaller in the downward direction. An inlet port is formed at a lower side and in the side surface, and an outlet port is formed at an upper side for the sake of discharge.

Therefore, the droplets and aerosols inputted through the inlet port of the side surface meet the outlet port of the lower side while circulating around along the concave portion and discharge through the separator, and the residual gas discharges upward.

The present invention may be embodied in several forms within the scope of the appended claims.

## Claims

1. A containment filtered venting system (CFVS) for a nuclear power plant, comprising:
a filtering and venting container;
an inlet pipe which, in use, is connected to the filtering and venting container and a reactor building;
an outlet pipe which, in use, connects the filtering and venting container and a stack; the filtering and venting container including
combined nozzles which are connected to the inlet pipe and are submerged under a filtering solution filled in part of the filtering and venting container;
a metal filter which is connected to the top of a cyclone separator and is configured to filter fiter impurities mixed in the residual droplets and aerosols;
a molecular sieve which is configured to remove organic iodine from exhaust gas filtered by the metal filter;
**characterized in that** the filtering and venting container further includes the cyclone separator which is configured to remove larger size substances in droplets and aerosols mixed with the filtering solution from the combined nozzles and to guide said droplets and aerosols to the metal filter.

2. The system of claim 1, wherein a radiation fin is formed on an outer surface of the filtering and venting container.

3. The system of claim 1, wherein a rupture plate is formed at the outlet pipe of the filtering and venting container, thus preventing any venting into the atmosphere if the pressure inside of the filtering and venting container does not rise over a predetermined level.

4. The system of claim 3, wherein the combined nozzles are configured in such a way that a distribution pipe of each combined nozzle is connected from the inlet pipe, and a contraction pipe the cross section of which gradually decreases extends from the distribution pipe and in a vertical direction, and a neck part the cross section of which is smallest is formed near the contraction part, and a plurality of holes for sucking the filtering solution are formed at the neck part, and an inner diffuser the cross section of which gradually increases in the upward direction is formed at the top of the neck part, and an upper cover is formed upward at an end portion of the diffuser, and the flowing direction of the exhaust gas from the diffuser is changed to the outward direction, and a side cover is formed at an end portion of the upper cover, thus changing the flowing direction of the exhaust gas to the downward direction, and another side cover is formed near the neck part, and the upper side cover starting from an end portion of the upper cover and the lower side cover formed around the neck part are separated by a separation plate, and holes through which the filtering solution enters or exits are formed at the side cover.

5. The system of claim 4, wherein the combined nozzles are arranged in order at a plurality of arms divided from a common head connected to the inlet pipe, and the filtering performance can be maximally enhanced through the uniform flux distribution by changing the arrangement intervals of the combined nozzle and the angles of the arms.

6. The system of claim 4, wherein a plurality of the combined nozzles are directly connected to the lower cavity connected to the inlet pipe, thus maximally increasing the filtering performance through the uniform flux distribution.

7. The system of claim 4, wherein an entrance is formed at a side of the cyclone separator, and a main outlet port of the cyclone separator is formed in a shape of a circular pillar and at an inner side of a cyclone and is formed at the ends of both sides of a concave part concavely formed up to a predetermined height of the body of the cyclone separator and has a circular cross section, and the larger size substances of aerosols inputted through at least one inlet port formed at a side and droplets flow back into a scrubber solution through a scrubber solution collection pipe which is a sub-outlet port connected to the lower side of the cyclone separator with the aid of gravity and centrifugal force while such larger size substances flow down along the concave part, and the smaller size substances gush up toward the main outlet port while the smaller size substances flow down along the concave part.

8. The system of claim 7, wherein an active carbon filter is disposed at a front end of the rupture plate, said active carbon filter being configured to delay in a physical adsorption way the discharge of an inert gas including xenon and krypton.

9. The system of claim 7, wherein a deep bed type molecular sieve disposed at a rear end of a throttle orifice and filled with a silver ion exchange zeolite is adapted to remove in a chemical way a gaseous iodine which contains an organic iodine.

10. The system of claim 7, wherein a metal filter formed of a pre-filter disposed at a rear end of the cyclone separator and a fine metal filter is adapted to remove in a physical way the residual droplets and fine aerosols.

11. The system of claim 8, wherein a pre-filter or a strainer is installed at an entrance of a through pipe inside of a containment building, said pre-filter or strainer being configured to previously prevent any clogging of a pipe due to impurities which may flow into the filtered venting system during the operation of the filtered venting system.

## Patentansprüche

1. Eine gefilterte Druckentlastung eines Sicherheitsbehälters (CFVS) für ein Kernkraftwerk, umfassend:
einen Filter- und Entlüftungsbehälter;
ein Einlassrohr, das bei Gebrauch mit dem Filter- und Entlüftungsbehälter und
einem Reaktorgebäude verbunden ist;
ein Auslassrohr, das bei Gebrauch den Filter- und Entlüftungsbehälter mit einem Schornstein verbindet;
wobei der Filter- und Entlüftungsbehälter kombinierte Düsen umfasst, die mit dem Einlassrohr verbunden sind und die in eine Filterlösung getaucht sind, die einen Teil des Filter- und Entlüftungsbehälters ausfüllt;
einen Metallfilter, der mit der Oberseite eines Zyklonabscheiders verbunden ist und ausgelegt ist um Verunreinigungen zu filtern, die in den verbliebenen Tröpfchen und Aerosolen enthalten sind;
ein Molekularsieb, das ausgelegt ist, um organische lodverbindungen aus dem durch den Metallfilter gefilterten Abgas zu entfernen;
**dadurch gekennzeichnet, dass** der Filter- und Entlüftungsbehälter weiter
den Zyklonabscheider umfasst, der ausgelegt ist um größere Substanzen in Tröpfchen und Aerosolen, welche mit der Filterlösung aus den kombinierten Düsen vermischt sind, zu entfernen und diese Tröpfchen und Aerosole zu dem Metallfilter zu leiten.

2. System nach Anspruch 1, wobei eine Strahlungsrippe an einer Außenfläche des Filter- und Entlüftungsbehälters ausgebildet ist.

3. System nach Anspruch 1, wobei eine Bruchplatte an dem Auslassrohr des Filter- und Entlüftungsbehälters ausgebildet ist, wodurch jegliches Entlüften in die Atmosphäre verhindert wird, wenn der Druck innerhalb des Filter- und Entlüftungsbehälters nicht über ein vorbestimmtes Niveau ansteigt.

4. System nach Anspruch 3, wobei die kombinierten Düsen in einer Weise ausgelegt sind, dass ein Verteilerrohr jeder kombinierten Düse mit dem Einlassrohr verbunden ist, und wobei sich ein Kontraktionsrohr, dessen Querschnitt allmählich abnimmt, von dem Verteilerrohr in einer vertikalen Richtung erstreckt, und ein Halsteil, dessen Querschnitt am kleinsten ist, in der Nähe des Kontraktionsteils ausgebildet ist, und eine Mehrzahl von Löchern zum Ansaugen der Filterlösung am Halsteil ausgebildet sind, und ein innerer Diffusor, dessen Querschnitt in der Aufwärtsrichtung allmählich zunimmt, oben auf dem Halsteil ausgebildet ist, und eine obere Abdeckung an einem Endabschnitt des Diffusors nach oben ausgebildet ist, und sich die Strömungsrichtung des Abgases vom Diffusor in die äußere Richtung ändert, und eine Seitenabdeckung an einem Endabschnitt der oberen Abdeckung ausgebildet ist, wodurch die Strömungsrichtung des Abgases in die Abwärtsrichtung geändert wird und eine andere Seitenabdeckung in der Nähe des Halsteils ausgebildet ist, und die obere, bei einem Endabschnitt der oberen Abdeckung beginnende Seitenabdeckung und die um den Halsteil ausgebildete untere Seitenabdeckung durch eine Trennplatte getrennt sind, und Löcher, durch welche die Filterlösung eintritt oder austritt, an der Seitenabdeckung ausgebildet sind.

5. System nach Anspruch 4, wobei die kombinierten Düsen der Reihe nach an einer Vielzahl von Armen angeordnet sind, die von einem gemeinsamen Kopf getrennt sind, der mit dem Einlassrohr verbunden ist und wobei die Filterleistung durch die gleichmäßige Flussverteilung durch Ändern der Anordnungsintervalle der kombinierten Düsen und der Winkel der Arme maximiert werden kann.

6. System nach Anspruch 4, wobei eine Vielzahl der kombinierten Düsen direkt verbunden sind mit dem unteren Hohlraum, der mit dem Einlassrohr verbunden ist, wodurch sich die Filterleistung durch die gleichmäßige Flussverteilung maximal erhöht.

7. System nach Anspruch 4, wobei ein Eingang an einer Seite des Zyklonabscheiders ausgebildet ist und eine Hauptauslassöffnung des Zyklonabscheiders in einer Form einer kreisförmigen Säule und an einer Innenseite eines Zyklons ausgebildet ist und an den Enden beider Seiten eines konkaven Teils ausgebildet ist, der bis zu einer vorbestimmten Höhe des Körpers des Zyklonabscheiders konkav ausgebildet ist und einen kreisförmigen Querschnitt aufweist, und wobei die größeren Substanzen des Aerosols, die durch mindestens eine an einer Seite gebildete Einlassöffnung eingehen und Tröpfchen zurück in eine Waschlösung durch ein Waschlösungssammelrohr, das eine mit der unteren Seite des Zyklonabscheiders verbundene Unterauslassöffnung ist, mit Hilfe der Schwerkraft und der Zentrifugalkraft fließen, während solche größeren Substanzen entlang des konkaven Teils fließen und die kleineren Substanzen in Richtung der Hauptauslassöffnung strömen, während die kleineren Substanzen entlang des konkaven Teils nach unten fließen.

8. System nach Anspruch 7, wobei ein Aktivkohlefilter an einem vorderen Ende der Bruchplatte angeordnet ist, wobei dieser Aktivkohlefilter ausgelegt ist um den Auslass eines Inertgases, einschließlich Xenon und Krypton, auf dem Weg der physikalischen Adsorption zu verzögern.

9. System nach Anspruch 7, wobei ein Tiefbett-Molekularsieb, das an einem hinteren Ende einer Drosselblende angeordnet ist und mit einem Silberionenaustauschzeolith gefüllt ist, bestimmt ist um auf chemischem Weg gasförmiges lod zu entfernen, welches organische lodverbindungen enthält.

10. System nach Anspruch 7, wobei ein Metallfilter, der als ein Vorfilter gebildet ist, der an einem hinteren Ende des Zyklonabscheiders angeordnet ist und ein Feinmetallfilter bestimmt sind, um die verbliebenen Tröpfchen und feine Aerosole auf physikalischem Weg zu entfernen.

11. System nach Anspruch 8, wobei ein Vorfilter oder ein Sieb an einem Eingang eines Durchgangsrohrs innerhalb eines Sicherheitsbehälters eingebaut ist, wobei dieser Vorfilter oder dieses Sieb ausgelegt ist um ein Verstopfen eines Rohres aufgrund von Verunreinigungen, die in die gefilterte Druckentlastung während des Betriebs der gefilterten Druckentlastung strömen können, vorab zu verhindern.

## Revendications

1. Système de ventilation filtrée de confinement (CFVS) pour une centrale nucléaire, comprenant:
un récipient de filtration et de ventilation;
un tuyau d'entrée qui, lors de l'utilisation, est relié au récipient de filtration et de ventilation et à un bâtiment de réacteur;
un tuyau de sortie qui, lors de l'utilisation, relie le récipient de filtration et de ventilation et une pile;
le récipient de filtration et de ventilation comprenant des buses combinées qui sont raccordées au tuyau d'entrée et sont immergées sous une solution filtrante remplie dans une partie du récipient de filtration et de ventilation;
un filtre métallique qui est relié au sommet d'un séparateur à cyclone et qui est configuré pour filtrer des impuretés mélangées dans les gouttelettes résiduelles et les aérosols;
un tamis moléculaire qui est configuré pour éliminer l'iode organique des gaz d'échappement filtrés par le filtre métallique;
**caractérisé en ce que** le récipient de filtration et de ventilation comprend en outre
le séparateur à cyclone qui est configuré pour éliminer des substances de plus grande taille dans les gouttelettes et les aérosols mélangés à la solution filtrante des buses combinées et guider lesdites gouttelettes et les aérosols vers le filtre métallique.

2. Système selon la revendication 1, dans lequel une ailette de rayonnement est formée sur une surface extérieure du récipient de filtration et de ventilation.

3. Système selon la revendication 1, dans lequel une plaque de rupture est formée au niveau du tuyau de sortie du récipient de filtration et de ventilation, empêchant ainsi toute éventation dans l'atmosphère si la pression à l'intérieur du récipient de filtration et de ventilation ne s'élève pas à un niveau prédéterminé.

4. Système selon la revendication 3, dans lequel les buses combinées sont configurées de telle manière qu'un tuyau de distribution de chaque buse combinée est raccordé depuis le tuyau d'entrée, et un tuyau de contraction dont la section diminue progressivement s'étend depuis le tuyau de distribution et dans une direction verticale, et une partie de col dont la section transversale est la plus petite est formée près de la partie de contraction, et une pluralité de trous pour aspirer la solution filtrante sont formés à la partie de col, et un diffuseur interne dont la section transversale augmente dans la direction ascendante est formé au sommet de la partie de col, et un couvercle supérieur est formé vers le haut à une partie d'extrémité du diffuseur, et la direction d'écoulement des gaz d'échappement du diffuseur est changée vers l'extérieur, et un couvercle latéral est formé au niveau d'une partie d'extrémité du couvercle supérieur, modifiant ainsi la direction d'écoulement des gaz d'échappement vers le bas, et un autre couvercle latéral est formé près de la partie de col, et le couvercle latéral supérieur à partir d'une partie terminale du couvercle supérieur et le couvercle latéral inférieur formé autour de la partie de col sont séparés par une plaque de séparation, et des trous à travers lesquels la solution filtrante entre ou sort sont formés sur le couvercle latéral.

5. Système selon la revendication 4, dans lequel les buses combinées sont agencées dans une pluralité de bras séparés d'une tête commune connectée au tuyau d'entrée, et performances de filtration peuvent être maximisées grâce à la répartition uniforme du flux en changeant les intervalles d'arrangement. de la buse combinée et les angles des bras.

6. Système selon la revendication 4, dans lequel une pluralité des buses combinées sont directement connectées à la cavité inférieure connectée au tuyau d'entrée, augmentant ainsi de manière optimale les performances de filtrage à travers la distribution de flux uniforme.

7. Système selon la revendication 4, dans lequel une entrée est formée d'un côté du séparateur à cyclone, et un orifice de sortie principal du séparateur à cyclone est formé sous la forme d'un pilier circulaire et sur un côté interne d'un cyclone et est formé aux extrémités des deux côtés d'une partie concave formée de manière concave jusqu'à une hauteur prédéterminée du corps du séparateur à cyclone et ayant une section transversale circulaire, et les substances de taille plus importante d'aérosols introduits à travers au moins un orifice d'entrée formé sur un côté et les gouttelettes refluent dans une solution d'épurateur à travers un tuyau de collecte de solution d'épuration qui est un orifice de sous-sortie relié au côté inférieur du séparateur cyclone à l'aide de gravité et de force centrifuge tandis que ces substances de taille plus importante descendent le long de la partie concave; les substances de plus petite taille jaillissent vers l'orifice de sortie principal tandis que les substances de plus petite taille s'écoulent le long de la partie concave.

8. Système selon la revendication 7, dans lequel un filtre à charbon actif est disposé à une extrémité avant de la plaque de rupture, ledit filtre à charbon actif étant configuré pour retarder d'une manière d'adsorption physique la décharge d'un gaz inerte comprenant du xénon et du krypton.

9. Système selon la revendication 7, dans lequel tamis moléculaire de type à lit profond disposé à une extrémité arrière d'un orifice d'étranglement et rempli d'une zéolite échangeuse d'ions d'argent est adapté pour éliminer de manière chimique un iode gazeux contenant un iode organique.

10. Système selon la revendication 7, dans lequel un filtre métallique formé d'un pré-filtre disposé au niveau d'une extrémité arrière du séparateur à cyclone et d'un filtre métallique fin est adapté pour éliminer de manière physique les gouttelettes résiduelles et les aérosols fins.

11. Système selon la revendication 8, dans lequel un pré-filtre ou une crépine est installé à l'entrée d'un tuyau traversant à l'intérieur d'un bâtiment de confinement, ledit pré-filtre ou crépine étant configuré pour prévenir préalablement tout colmatage d'un tuyau dû à des impuretés qui peuvent s'écouler dans le système de ventilation filtré pendant le fonctionnement du système de ventilation filtré.
